(19) **Europäisches Patentamt**
**European Patent Office**
**Office européen des brevets**

(11) **EP 2 410 509 A1**

(12) **EUROPEAN PATENT APPLICATION**
published in accordance with Art. 153(4) EPC

(43) Date of publication:
**25.01.2012 Bulletin 2012/04**

(51) Int Cl.:
**G09G 3/36** (2006.01) **G02F 1/133** (2006.01)
**G09G 3/20** (2006.01) **G09G 3/34** (2006.01)

(21) Application number: **10753400.0**

(22) Date of filing: **02.03.2010**

(86) International application number:
**PCT/JP2010/053296**

(87) International publication number:
**WO 2010/106905 (23.09.2010 Gazette 2010/38)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.03.2009 JP 2009069112**

(71) Applicant: **Aomori Support Center for Industrial Promotion**
**Aomori-shi**
**Aomori 030-0801 (JP)**

(72) Inventors:
• **MURAI, Hiroshi**
**Hachinohe-shi**
**Aomori 039-2245 (JP)**

• **SEKIYA, Kazuo**
**Hachinohe-shi**
**Aomori 039-2245 (JP)**
• **WAKO, Kazuhiro**
**Hachinohe-shi**
**Aomori 039-2245 (JP)**

(74) Representative: **Henkel, Breuer & Partner**
**Patentanwälte**
**Maximiliansplatz 21**
**80333 München (DE)**

(54) **FIELD-SEQUENTIAL COLOR TYPE LIQUID CRYSTAL DISPLAY APPARATUS AND COLOR DISPLAY METHOD THEREFOR**

(57) A control and drive circuit provided to an FSC-LCD includes an input stage signal processing and control circuit 21 that generates a synchronization signal 32 that synchronizes with a frame frequency of a video signal 30 received and video data 34, a sequencer 22 that determines the number of color fields in one frame, a color signal allocated to each of the color fields, and the transmission order of the color signals thus allocated, and generates and outputs field specifying signals 38 and 40 for specifying the color fields corresponding to the transmission order, and an output stage signal processing and control circuit 25 that receives video data 36 from the input stage signal processing and control circuit 21, based on the field specifying signal 38 from the sequencer 22, and outputs the video data 36 to a source driver 13 and a gate driver 14.

FIG.2

**Description**

TECHNICAL FIELD

The present invention relates to a liquid crystal display, and in particular to a field-sequential color liquid crystal display and a method for displaying colors thereof.

BACKGROUND ART

A field-sequential color (FSC) liquid crystal display (hereinafter, referred to as an "FSC-LCD") is such a display that sequentially displays red, green, and blue, which are the three primary colors of light, in one frame on the same pixel of the FSC-LCD, and that does not employ color pixels used in a typical color-filter LCD (hereinafter, referred to as a "CF-LCD").

As is well known, the greatest disadvantage of the FSC-LCD is that "color breakup" may occur. In other words, if a certain displayed object is moving on a display screen of the FSC-LCD, the leading edge and the trailing edge thereof lock like spectral colors. If the color breakup is suppressed to a level that poses no problem for practical use, the FSC-LCD is expected to be used for various applications as a display with extremely high potential.

By contrast, in terms of color breakup, researchers including the present inventors have disclosed that color breakup can be reduced in Patent Literature 1, which was filed prior to the present application. Specifically, the method for displaying colors for an FSC-LCD in Patent Literature 1 is a method for adding black of one or two or more fields before and/or after a group of the three primary colors, and sequentially displaying the colors in the group added.

Patent Literature 1: Japanese Laid-open Patent Publication No. 2007-264211

DISCLOSURE OF INVENTION

PROBLEM TO BE SOLVED BY THE INVENTION

However, Patent Literature 1 discloses no specific method on how to realize the method for displaying colors in the form of systems. Furthermore, the method for displaying colors disclosed in Patent Literature 1 may not be necessarily most suitable for each image (moving image) constituting a video signal. An optimal combination of colors in displaying colors differs depending on the use of the display or characteristics of the moving image (for example, what the dominant color is and what the subdominant color is). Therefore, it is required to develop a system that makes it possible to select colors and display colors sequentially in a preferable manner in accordance with the use of the display or characteristics of the moving image.

In view of the above circumstances, it is an object of the present invention to provide a field-sequential color liquid crystal display and a method for displaying colors thereof that make it possible to select colors and display colors sequentially in a preferable manner in accordance with the use of the display or characteristics of the moving image.

MEANS FOR SOLVING PROBLEM

In order to solve the problem described above and perform the object of the present invention, a field-sequential color liquid crystal display in accordance with the present invention is described as follows. The field-sequential color liquid crystal display includes a control and drive circuit that allocates a basic element color for displaying a display color of each pixel in one frame to a plurality of color fields, and that performs control to sequentially transmit a color signal allocated to each of the color fields to a drive unit of a display panel, wherein a color field required for display is defined in the control and drive circuit. The control and drive circuit includes: a first signal processing circuit that generates a synchronization signal synchronizing with a frame frequency of the video signal and predetermined video data, based on a video signal received; a color field specifying unit that determines, in a changeable manner, number of color fields in one frame, the color signal allocated arbitrarily to each of the color fields, and a transmission order of the color signal thus allocated, generates a field specifying signal for specifying each of the color fields corresponding to the transmission order, and outputs the field specifying signal at a timing of a field frequency obtained by multiplying the frame frequency by the number of fields; and a second signal processing circuit that outputs the video data from the first signal processing circuit to the drive unit of the display panel, based on the field specifying signal from the color field specifying unit.

EFFECT OF INVENTION

According to a field-sequential color liquid crystal display of the present invention, it is possible to select colors and display colors sequentially in a preferable manner in accordance with the use of the display or other factors.

BRIEF DESCRIPTION OF DRAWINGS

FIG. 1 is a view of a schematic configuration of an FSC-LCD according to a first embodiment of the present invention.
FIG. 2 is a diagram of a detail configuration of an LCD control and drive circuit according to the first embodiment of the present invention.
FIG. 3 is a diagram of an exemplary configuration of an output stage signal processing and control circuit according to a second embodiment of the present invention.
FIG. 4 is a diagram of a detail configuration of an LCD control and drive circuit according to a third embodiment of the present invention.
FIG. 5 is a diagram of a detail configuration of an LCD control and drive circuit according to a fourth embodiment of the present invention.

BEST MODES FOR CARRYING OUT THE INVENTION

Exemplary embodiments of a field-sequential color liquid crystal display and a method for displaying colors thereof according to the present invention will be described below in greater detail with reference to the accompanying drawings. It is to be noted that the embodiments below are not intended to limit the present invention.

First Embodiment

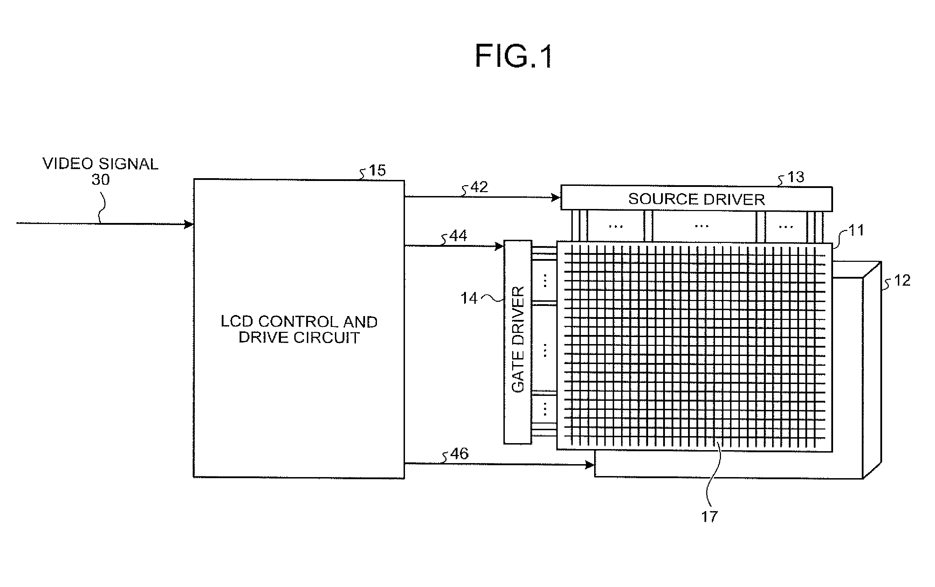

FIG. 1 is a view of a schematic configuration of a field-sequential color liquid crystal display (FSC-LCD) according to a first embodiment of the present invention. As illustrated in FIG. 1, the FSC-LCD according to the first embodiment is configured to include a liquid crystal display panel 11, a backlight 12, a source driver 13, a gate driver 14, and a liquid crystal display (LCD) control and drive circuit 15.
The display panel 11 of the FSC-LCD is formed of a TFT array 17 in which a lot of pixels composed of TFTs are arranged. Furthermore, in the display panel 11, for example, nematic mode liquid crystal is sealed, and constitutes a display cell together with a pair of polarizers, a phase difference compensation film, and the like. The LCD explained in the present embodiment is an FSC-LCD, and the display panel 11 is not provided with a color filter.
The backlight 12 is arranged at the rear of the display panel 11. The backlight 12 is a light source unit that outputs light of red (R), green (G), and blue (B) in synchronization with a color signal displayed on the display panel 11 based on a backlight (BL) control signal 46 from the LCD control and drive circuit 15. The example of the field-sequential color system used herein is a three-primary-color type of RGB. However, the three primary colors may be three primary colors other than RGB, such as cyan (C), magenta (M), and yellow (Y). Seven colors obtained by adding white (W) to R, G, B, Y, M, and C are hereinafter referred to as basic element colors. If RGB are used as the three primary colors, Y is realized by mixing G and R, M is realized by mixing R and B, C is realized by mixing B and G, and W is realized by mixing R, G, and B.
The source driver 13 and the gate driver 14 serving as drive units of the display panel 11 are arranged on the periphery of the display panel 11. The gate driver 14 can be configured, for example, by using a driver IC including a switching element inside thereof. The gate driver 14 controls a timing of application of voltage to a gate of each TFT constituting the TFT array 17, based on a gate drive signal 44 from the LCD control and drive circuit 15. The source driver 13 can be configured, for example, by using a driver IC including an arithmetic circuit inside thereof. The source driver 13 controls a timing of application of voltage to a source of each TFT and a magnitude cf the applied voltage corresponding to gradations of video data, based on a source drive signal 42 from the LCD control and drive circuit 15. It is to be noted that the layout illustrated in FIG. 1 is an example only, and the present invention is not limited to the layout.

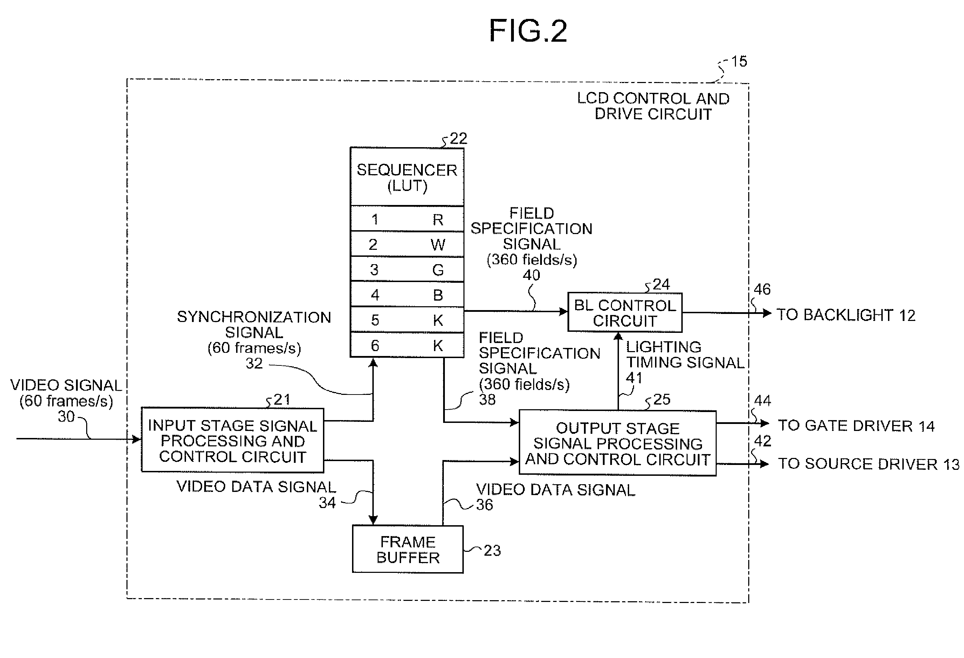

FIG. 2 is a block diagram of a detail configuration of the LCD control and drive circuit 15. In FIG. 2, the LCD control and drive circuit 15 includes an input stage signal processing and control circuit 21, a sequencer 22, a frame buffer 23, a backlight (BL) control circuit 24, and an output stage signal processing and control circuit 25. The sequencer 22 functions as a color field specifying unit.
The input stage signal processing and control circuit 21 receives, for example, a video signal 30 of 60 frames per second (60 frames/s). An explanation will be made of the video signal 30 of 60 frames/s below. However, the video signal thus received may be other frequencies, such as 59.94 frames/s, and 60 frames/s is replaced by the other frequencies in that case. The input stage signal processing and control circuit 21 converts gradation data in accordance with intensity and colors, based on the video signal 30, and outputs the gradation data thus converted to the frame buffer 23 as video data 34. Furthermore, the input stage signal processing and control circuit 21 generates a synchronization signal 32 that synchronizes with the frame frequency of the video signal 30, and outputs the synchronization signal 32 to the sequencer 22.

FIG. 2 illustrates a table (discrimination table of color fields) for selecting a color signal allocated to a color field in one frame in the sequencer 22. The numbers 1 to 6 illustrated on the left side of FIG. 2 represent color field numbers. The alphabets R, W, G, B, and K (black) illustrated on the right side thereof represent color discrimination marks, and the meaning of each mark is as described above. The table may be a concept of a lookup table (LUT) referred to by the sequencer 22, or may be a concept of a sequence set that outputs information of the color fields in numerical order in synchronization with the synchronization signal 32. In the case of the sequence set, a plurality of sets is prepared in accordance with the configuration of color fields. If the sequence set is used, a field specifying signal may be transmitted in order prescribed in the sequence set using a synchronization signal as a trigger, thereby resulting in smooth processing in the sequencer 22 advantageously. By contrast, if the LUT is used, when the number of color fields is changed depending on the use, for example, no specific sequence set needs to be prepared. Therefore, there is an advantage in that it is sufficient to change a read process of the LUT. For example, if the LUT includes the six color fields as illustrated in FIG. 2, it is possible to perform display control with a configuration of color fields of "RGBK" without using "W" and one of "K" in a simple manner.

When the sequencer 22 receives the synchronization signal 32 from the input stage signal processing and control circuit 21, the sequencer 22 refers to the LUT based on predetermined information (e.g., the number of color fields in one frame, the color signal allocated to each color field, and the transmission order of the color signals thus allocated). The sequencer 22 then outputs a field specifying signal 40 to the BL control circuit 24, and outputs a field specifying signal 38 to the output stage signal processing and control circuit 25. The field specifying signal 40 is a signal indicating what color the backlight to be lighted is. The field specifying signal 38 is the same as the field specifying signal 40 except that the transmission timing thereof is different from that of the field specifying signal 40. However, in an CCB mode liquid crystal display, for example, write voltage (applied voltage) to a pixel circuit differs depending on what the color to be displayed is. Therefore, the field specifying signal 38 is different from the field specifying signal 40.

The BL control circuit 24 generates a BL control signal 46 for controlling the backlight, based on the field specifying signal 40 thus received, and outputs the BL control signal 46 to the backlight 12. The outputs timing of the 3L control signal 46 is controlled by a lighting timing signal 41 from the output stage signal processing and control circuit 25.

The output stage signal processing and control circuit 25 sequentially receives video data 36 retained in the frame buffer 23, and generates a source drive signal 42 and a gate drive signal 44 in synchronization with the input timing of the field specifying signal 38 from the sequencer 22. In other words, the gate drive signal 44 is output to the gate driver 14, and the source drive signal 42 is output to the source driver 13.

The color fields configured in the sequencer 22 will now be described in detail.

(In RGB display and in the case where the number of color fields is "6")

In the RGB display and in the case where the number of color fields is "6", the configuration of the color fields is, for example, "RGBKKK". The order of the marks herein represents the order of transmission (that is, the order of display). "K" represents specifying black in a color field. In this case, control may be performed such that the corresponding pixel on the display panel is driven to be in a black state (that is, the TFT of the corresponding pixel is controlled to block light), or such that the backlight is turned off. In addition, in the color field in which no color signal is displayed, such as "...KKK", a plurality of black fields are collected and arranged, thereby making it possible to perform display control with a small motion blur. If the number of color fields is "6", the field specifying signal is transmitted in a transmission cycle of 60 (frames/s)×6 (fields/f)=360 (fields/s) as illustrated in FIG. 2.

As described above, the case of "RGBKKK" is used as an example of the color field configuration in the case of the RGB display and the case where the number of color fields is "6". However, in addition to this color field configuration, other color field configurations, such as "RBGKKK", "GBRKKK", "GRBKKK", "BRGKKK", and "3GRKKK", may also be used. Furthermore, "RGB" is not necessarily arranged at the beginning thereof, such as "RGB...", and a color field configuration, such as "KRGBKK", "KKRGBK", and "KKKRGB", may also be used. Alternatively, a color field configuration obtained by changing the order of "RGB" in each of the color field configurations may also be used.

(In RGBW display and in the case where the number of color fields is "6")

In RGBW display and in the case where the number of color fields is "6", the configuration of the color fields is, for example, "RWGBKK" (refer to FIG. 2). Including the color field of "W" in this manner is suitable for a screen in which white is prominent (screen whose dominant color is white). As is well known, mixing the three primary colors of RGB makes it possible to display white. However, if the configuration is formed of a plurality of color fields, the influence of the color breakup increases. Therefore, as in the present embodiment, it is preferable that "W" in which no color breakup is desired to occur be allocated to one color field other than "RGB" in an aspect. The color field configuration is not limited to "RWGBKK", and another color field configuration, such as "KRWGBK" and "KKPWGB", may also be used. Alternatively, a color field configuration obtained by changing the order of "RWGB" in each of the color field configurations may also be used.

(In RGBY display and in the case where the number of color fields is "6")

In RGBY display and in the case where the number of color fields is "6", the configuration of the color fields is, for example, "RYGBKK". When a human skin is observed, for example, it is preferable that "Y" be included in the color fields. The color of a human skin is so-called whitish-red and has characteristics close to yellow in terms of color. Therefore, it is preferable that yellow in which no color breakup is desired to occur be a dominant color and be allocated to one color field. The color field configuration is not limited to "RYGBKK", and other color field configurations, such as "KRYGBK" and "KKRYGB", may also be used. Alternatively, a color field configuration obtained by changing the order of "RYGB" in each of the color field configurations may also be used.

(In RGBWY display and in the case where the number of color fields is "6")

In RGBWY display and in the case where the number of color fields is "6", the configuration of the color fields is, for example, "RYGWBK". When an inside of a human body is observed by an endoscope, for example, an image in which a "hot spot" occurs because of reflection of projection illumination light is observed frequently. Therefore, it is preferable that "W" corresponding to the "hot spot" and "Y", which is close to the color of a human skin, be included in the color fields. The color field configuration is not limited to "RYGWBK", and another color field configuration, such as "KRYGWB", may also be used. Alternatively, a color field configuration obtained by changing the order of "RYGWB" in each of the color field configurations may also be used.

(In black-and-white display and in the case where the number of color fields is "6")

In the above description, the case where the present invention is applied to a color FSC-LCD is explained. However, the present invention can also be applied to a black-and-white FSC-LCD. In black-and-white display, the basic element color is W, and the color fields of RGB are not necessary. Therefore, if the number of color fields remains "6", the configuration of color fields can be, for example, "WKKKKK". In the black-and-white display, displaying black consecutively makes it possible to realize clearer screen display. Therefore, if there is a use in which the color display and the black-and-white display are switched, the advantage is derived that functions prepared for the color display can be used as functions for the black-and-white display.

(In the case where the number of color fields is smaller than 6)

In the above description, the case where the number of color fields is 6 is explained. However, the number of color fields can be smaller than 6. In this case, as described above, the sequence set may be rewritten correspondingly to the number of color fields or be provided newly, or the read processing of the LUT may be changed slightly. For example, in the case where the LUT of six color fields is provided as illustrated in FIG. 2, if display control is performed by configuring color fields of "RGBK" without using "W" and one of "K", the sequencer 22 may select the color fields in order of "R", "G", "B", and "K" from the LUT and output the color fields thus selected to the EL control circuit 24 and the output stage signal processing and control circuit 25. If the number of color fields is "4", the transmission cycle of the field specifying signal is 60 (frames/s)×4 (fields/f)=240 (fields/s).

(In the case where the number of color fields exceeds 6)

In the case where the number of color fields exceeds 6, which is similar to the case smaller than 6, the sequence set may be rewritten correspondingly to the number of color fields or be set newly, or the read processing of the LUT may be changed. If the LUT is used, retaining color fields required at a maximum makes it possible to change the color fields appropriately in accordance with the use or other factors. If the number of color fields is "8", for example, the transmission cycle of the field specifying signal is 60 (frames/s)×8 (fields/f)=480 (fields/s).

In the example described above, while the basic element colors in the color display are "RGB", it is to be understood that "CMY" can also be used as the basic element colors.

Furthermore, in the above description, the system in which the backlight is not a scanning type is explained briefly. However, the present invention can also be applied to a scanning backlight system. In the scanning backlight system, the backlight is divided into a unit of a block, and the orders of transmission of signals can be different between the blocks. Therefore, the sequence set and the LUT described above are provided in each block, for example, thereby making it possible to deal with the different orders of transmission. If there is regularity in scanning of each block, it is possible to recognize LUTs of other blocks from a LUT of one block in a simple manner. Therefore, providing one LUT as illustrated in FIG. 2 makes it possible to deal with the different orders of transmission.

As described above, with the FSC-LCD according to the first embodiment, the number of color fields in one frame, a color signal allocated to each of the color fields, and the transmission order of the color signals thus allocated are determined. A field specifying signal for specifying a color field corresponding to the transmission order is generated, and the field specifying signal is output at the timing of the field frequency obtained by multiplying the frame frequency by the number of fields. Accordingly, it is possible to select colors and display colors sequentially in a preferable manner in accordance with the use of the display or other factors.

Second Embodiment

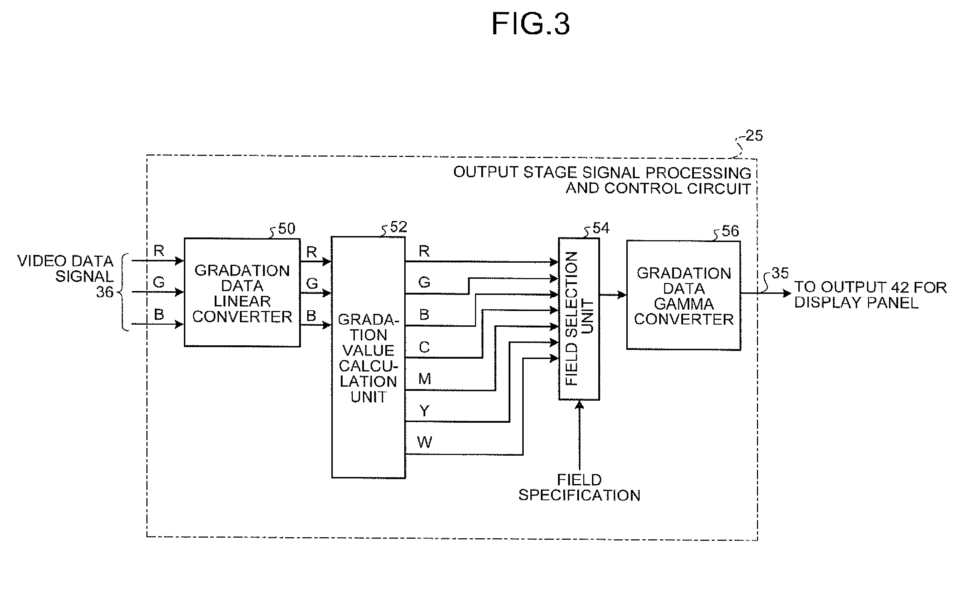

FIG. 3 is a diagram of an exemplary configuration of an output stage signal processing and control circuit according to a second embodiment of the present invention, and is a configuration diagram illustrating detailed functions of the output stage signal processing and control circuit 25 illustrated in FIG. 2. In the first embodiment, the functions that can freely deal with the color fields is explained. FIG. 3 illustrates a specific configuration for realizing the function.

As illustrated in FIG. 3, the output stage signal processing and control circuit 25 is configured to include a gradation data linear converter 50 serving as a first converter, a gradation value calculation unit 52, a field selection unit 54, and a gradation data gamma converter 56 serving as a second converter.

The video data signal 36 received by the output stage signal processing and control circuit 25 typically has different values of $\gamma$ depending on input sources (in the PAL system: $\gamma=2.7$, in the NTSC system: $\gamma=2.2$). As a result, if the value (gradation value (gray-scale value of each color)) is used as it is, processing performed by the gradation value calculation unit 52, which will be described later, is made complicated (it is impossible to perform linear calculation). Therefore, the gradation data linear converter 50 converts the video data thus received (R, G, and B) into second video data on which the linear calculation can be performed. The conversion processing into the second video data is performed such that $\gamma$ is set to 1 using a gradation data linear conversion table or the like.

The gradation value calculation unit 52 performs predetermined gradation calculation on the second video data converted by the gradation data linear converter 50, and generates video data of a desired color and a desired gradation value. With respect to the gradation calculation, a method for referring to the LUT may be applied, or a method for using a comparator to calculate the value may be applied. Furthermore, FIG. 3 illustrates a configuration in which video data (gradation data) of "RCBCMYW" is calculated from the video data of "RGB". However, all the gradation calculation need not be performed, and the calculation may be performed on necessary data.

Based on the field specifying signal 38 from the sequencer 22, the field selection unit 54 selects and outputs video data corresponding to the color signal allocated to the field specifying signal from the second video data on which the gradation conversion is performed. The gradation data gamma converter 56 performs inverse conversion processing to the conversion processing performed by the gradation data linear converter 50 (that is, processing for restoring $\gamma$ to the original value, or processing for adjusting $\gamma$ to $\gamma$ characteristics of the liquid crystal display panel), on the video data output from the field selection unit 54. The gradation data gamma converter 56 then determines video data 35 thus generated to be data of the source drive signal 42 that is to be output to the display panel 11.

FIG. 3 illustrates the configuration in which the output stage signal processing and control circuit 25 includes the gradation data linear converter 50, the gradation value calculation unit 52, the field selection unit 54, and the gradation data gamma converter 56 as an example. However, these components may be included in the input stage signal processing and control circuit 21. In this case, the input signal (video data signal 36) to the gradation data linear converter 50 corresponds to the video signal 30, and the output signal 35 corresponds to the video data signal 34. Furthermore, in this case, the field selection unit 54 by the field specification is not necessary. All video data of colors required for the color field configuration among RGBCMYW is passed through the gamma converter 56, and is then stored in the frame bluffer 23. Alternatively, the functions of these four components can be divided as necessary to be arranged in the input stage signal processing and control circuit 21 and the output stage signal processing and control circuit 25. For example, the gradation data linear converter 50 and the gradation value calculation unit 52 may be arranged in the input stage signal processing and control circuit 21, whereas the field selection unit 54 and the gradation data gamma converter 56 may be arranged in the output stage signal processing and control circuit 25.

As an example of the processing performed in the gradation value calculation unit 52, a case where gradation data of "RGBW" is calculated from the video data of "RGB" will be explained. Pixel values of "RGB" prior to the gradation calculation are represented by $V_R$, $V_G$, and $V_B$, respectively, and pixel values of "RGBW" posterior to the gradation calculation are represented by $V_R'$, $V_G'$, $V_B'$, and $V_W'$, respectively.

<Step 1>

First, the pixel values $V_R$, $V_G$, and $V_B$ are received from the gradation data linear converter 50.

<Step 2>

Subsequently, $V_W{}'$ is calculated by the following equation.

$$V_W{}'=\min(V_R,\ V_G,\ V_B) \qquad\qquad (1)$$

where the symbol "min" means selecting the minimum value of the three values.

<Step 3>

Furthermore, $V_R{}'$, $V_G{}'$, and $V_B{}'$ are calculated by the following equations.

$$V_R{}'=V_R-V_W{}' \qquad\qquad (2)$$

$$V_G{}'=V_G-V_W{}' \qquad\qquad (3)$$

$$V_B{}'=V_B-V_W{}' \qquad\qquad (4)$$

<Step 4>

$V_R{}'$, $V_B{}'$, $V_B{}'$, and $V_W{}'$ expressed by the equations (1) to (4) are output to the field selection unit 54.

In this manner, if the RGBW display is performed, the processing based on the steps described above may be performed. If other displays are performed, the same steps as those described above may be performed.

As described above, according to the FSC-LCD of the second embodiment, the received video data is converted into the second video data on which the linear calculation can be performed. The predetermined gradation calculation is performed on the second video data to generate the video data required for the configuration of color fields, and the video data corresponding to the color signal allocated to the field specifying signal is selected sequentially from the second video data on which the gradation conversion is performed. Accordingly, it is possible to select colors and display colors sequentially in a preferable manner in accordance with the use of the display or characteristics of the moving image. Furthermore, in the processing of the second embodiment, the processing for restoring $\gamma$ to the original value is performed on the video data on which the gradation conversion is performed and that is selected sequentially, thereby making it possible to reduce the amount of calculation required for the conversion processing.

Third Embodiment

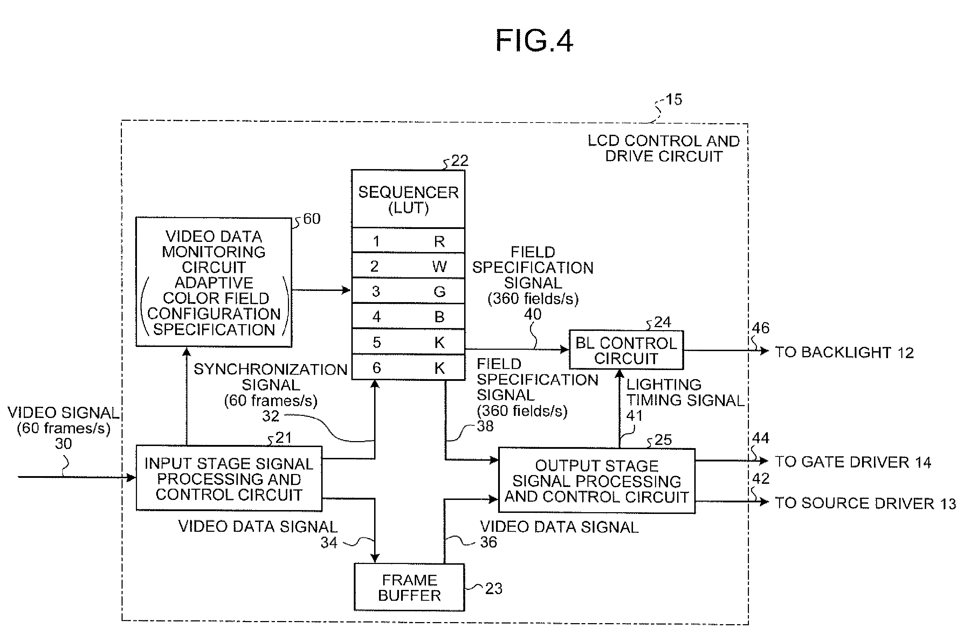

FIG. 4 is a diagram of a detailed configuration of an LCD control and drive circuit according to a third embodiment of the present invention. The LCD control and drive circuit 15 illustrated in the drawing has a configuration in which a video data monitoring circuit 60 is provided between the input stage signal processing and control circuit 21 and the sequencer 22 in the configuration illustrated in FIG. 2. Other components are the same as or equivalent to those in the first embodiment illustrated in FIG. 2. The same numerals are assigned to the components common therebetween, and the detail description thereof will be omitted.

In FIG. 4, the video data monitoring circuit 60 has a function to monitor received video data and to adaptively change the configuration of color fields in accordance with characteristics of the received video data (for example, what the dominant color is and what the subdominant color is). In determination of the dominant color and the subdominant color, the number of pixels for each color is counted, for example, in one or a plurality of moving images. In the basic element colors generated by mixing colors, such as YMCW, a color whose count value is the largest (that is, the area thereof is the largest) and exceeds a predetermined threshold value may be determined to be the dominant color. Similarly, in the basic element colors generated by mixing colors, a color whose count value is the second largest (that is, the area thereof is the second largest) and exceeds a predetermined threshold value may be determined to be the subdominant color.

If it is determined that the dominant color is present, or that both of the dominant color and the subdominant color are present, the video data monitoring circuit 60 controls the sequencer 22 to adaptively change the configuration of color fields. The function can be realized by causing the video data monitoring circuit 60 to have a function to output a signal for rewriting entries of the LUT included in the sequencer 22 or a function to output a signal for selecting a sequence set included in the sequencer 22. When receiving these control signals, the sequencer 22 changes the configuration of color fields, and outputs the field specifying signal 38 and the field specifying signal 40 after the change.

As described above, according to the FSC-LCD of the third embodiment, based on the monitoring result of the video data monitoring circuit, at least one of the number of color fields in one frame, a color signal allocated to each of the color fields, and the transmission order of the color signals thus allocated is changed and processed adaptively. Accordingly, it is possible to select colors and display colors sequentially in a preferable manner in accordance with the use of the display or characteristics of the moving image.

Fourth Embodiment

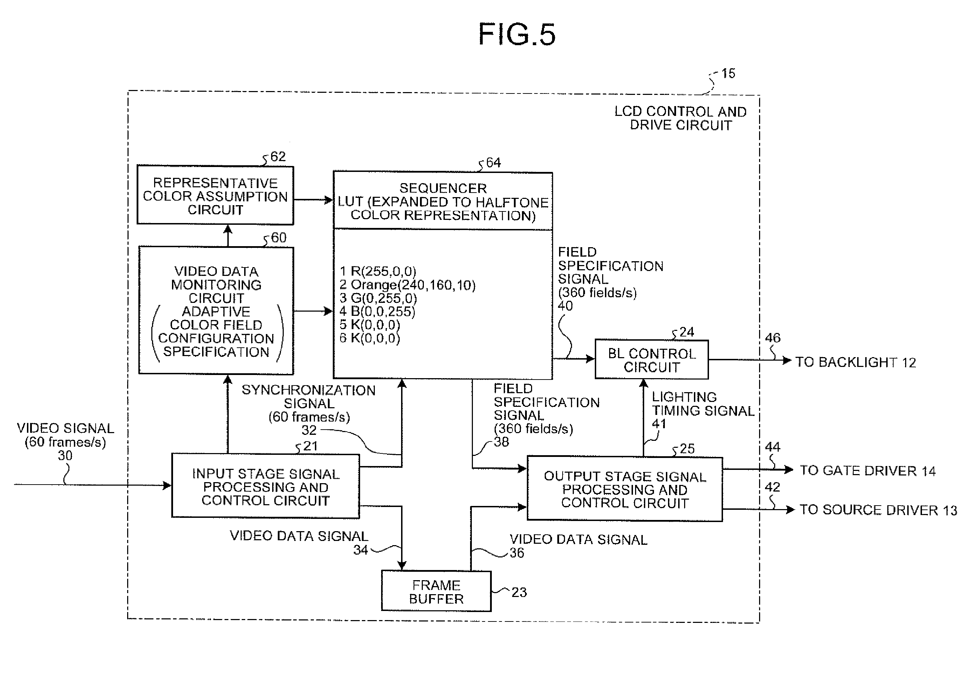

FIG. 5 is a diagram of a detailed configuration of an LCD control and drive circuit according to a fourth embodiment of the present invention. The LCD control drive circuit 15 illustrated in the drawing has a configuration in which a representative color assumption circuit 62 is provided between the video data monitoring circuit 60 and a sequencer 64, in the configuration illustrated in FIG. 4. Furthermore, the LUT included in the sequencer 64 is changed into halftone color representation. Other components are the same as or equivalent to those in the third embodiment illustrated in FIG. 4. The same numerals are assigned to the components common therebetween, and the detail description thereof will be omitted.

In FIG. 5, the representative color assumption circuit 62 assumes a more appropriate gradation value for color information notified from the video data monitoring circuit 60, by dealing with not only the basic element colors, such as RGBYMCW, but also intermediate colors therebetween. The representative color assumption circuit 62 reflects the gradation value thus assumed on the LUT of the sequencer 64 (FIG. 5 illustrates an example in which a gradation value of orange is assumed and the LUT is rewritten thereby).

In other words, the representative color assumption circuit 62 functions as a gradation value assumption circuit that assumes the gradation value of a color notified from the video data monitoring circuit 60. Providing such a gradation value assumption circuit enables display control that accurately reproduces the color information of the moving image.

As described above, according to the FSC-LCD of the fourth embodiment, the gradation value of the color information notified from the video data monitoring circuit is assumed to be reflected on the LUT. Accordingly, in addition to the advantageous effects of the first to the third embodiments, the advantage is derived that the accuracy when the received video signal is displayed can be improved.

INDUSTRIAL APPLICABILITY

As described above, the field-sequential color liquid crystal display and the method for displaying colors thereof according to the present invention is useful as the invention that makes it possible to select colors and display colors sequentially in a preferable manner in accordance with the use of the display or characteristics of a moving image.

EXPLANATIONS OF LETTERS OR NUMERALS

11    LIQUID CRYSTAL DISPLAY PANEL

12    BACKLIGHT

13    SOURCE DRIVER

14    GATE DRIVER

15    LCD CONTROL DRIVE CIRCUIT

17    TFT ARRAY

21    INPUT STAGE SIGNAL PROCESSING AND CONTROL CIRCUIT

22, 64    SEQUENCER

23        FRAME BUFFER

24        BACKLIGHT (BL) CONTROL CIRCUIT

25        OUTPUT STAGE SIGNAL PROCESSING AND CONTROL CIRCUIT

30        VIDEO SIGNAL

32        FRAME SYNCHRONIZATION SIGNAL

34, 36    VIDEO DATA

35        SIGNAL CONSTITUTING A PART OF A SIGNAL 42 TO THE SOURCE DRIVER AS OUTPUT TO THE DISPLAY PANEL

38, 40    FIELD SPECIFYING SIGNAL

41        LIGHTING TIMING SIGNAL

42        SOURCE DRIVER SIGNAL

44        GATE DRIVE SIGNAL

46        BACKLIGHT (BL) CONTROL SIGNAL

50        GRADATION DATA LINEAR CONVERTER

52        GRADUATION VALUE CALCULATION UNIT

54        FIELD SELECTION UNIT

56        GRADATION DATA GAMMA CONVERTER

60        VIDEO DATA MONITORING CIRCUIT

62        REPRESENTATIVE COLOR ASSUMPTION CIRCUIT

**Claims**

1.  A field-sequential color liquid crystal display comprising a control and drive circuit that allocates a basic element color for displaying a display color of each pixel in one frame to a plurality of color fields, and that performs control to sequentially transmit a color signal allocated to each of the color fields to a drive unit of a display panel, wherein a color field required for display is defined in the control and drive circuit, the control and drive circuit comprising:

    a first signal processing circuit that generates a synchronization signal synchronizing with a frame frequency of the video signal and predetermined video data, based on a video signal received;
    a color field specifying unit that determines, in a changeable manner, number of color fields in one frame, the color signal allocated arbitrarily to each of the color fields, and a transmission order of the color signal thus allocated, generates a field specifying signal for specifying each of the color fields corresponding to the transmission order, and outputs the field specifying signal at a timing of a field frequency obtained by multiplying the frame frequency by the number of fields; and
    a second signal processing circuit that outputs the video data from the first signal processing circuit to the drive unit of the display panel, based on the field specifying signal from the color field specifying unit.

2.  The field-sequential color liquid crystal display according to claim 1, wherein the first signal processing circuit comprises:

a first converter that converts video data received into second video data to which linear calculation is applicable;
a gradation value calculation unit that performs a predetermined gradation calculation on the second video data;
a field selection unit that sequentially selects video data corresponding to the color signal allocated to the field specifying signal from the second video data on which gradation conversion is performed, based on the field specifying signal from the color field specifying unit; and
a second converter that performs processing corresponding to inverse conversion to conversion processing performed by the first convertor, on the video data output from the field selection unit, and outputs the video data thus generated to the second signal processing circuit.

3. The field-sequential color liquid crystal display according to claim 1, wherein the second signal processing circuit comprises:

a first converter that converts the video data from the first signal processing circuit into second video data to which linear calculation is applicable;
a gradation value calculation unit that performs a predetermined gradation calculation on the second video data;
a field selection unit that sequentially selects video data corresponding to the color signal allocated to the field specifying signal from the second video data, based on the field specifying signal from the color field specifying unit; and
a second converter that performs processing corresponding tc inverse conversion to conversion processing performed by the first convertor, on the video data output from the field selection unit, and outputs the video data thus generated to the drive unit of the display panel.

4. The field-sequential color liquid crystal display according to any one of claims 1 to 3,
wherein the control and drive circuit further comprises a video data monitoring circuit that monitors a color configuration of the video data output by the first signal processing circuit, and
wherein the field specifying unit changes and processes adaptively at least one of the number of color fields in one frame, the color signal allocated to each of the color fields, and the transmission order of the color signal thus allocated, based on a monitoring result of the video data monitoring circuit.

5. The field-sequential color liquid crystal display according to claim 4,
wherein the control and drive circuit further comprises a gradation value assumption circuit that assumes a gradation value of a color notified from the video data monitoring circuit, and
wherein the gradation value assumption circuit uses the gradation value thus assumed and changes color information stored in the color field specifying unit.

6. The field-sequential colcr liquid crystal display according to any one of claims 1 to 5, wherein the basic element color includes red (R), green (G), and blue (B), or cyan (C), magenta (M), yellow (Y), and white (W), and the color fields of four or more colors among the basic element color and black (K) included as a color are configured in the color field specifying unit.

7. The field-sequential color liquid crystal display according to any one of claims 1 to 5, wherein the basic element color is white (W), and the color fields of two or more colors including the white (W) and black (K) as an additional color added to the basic element color are configured in the color field specifying unit.

8. The field-sequential color liquid crystal display according to any one of claims 1 to 5, wherein the basic element color includes red (R), green (G), and blue (B), or cyan (C), magenta (M), and yellow (Y), and the color fields of five or more colors always including white (W) and black (K) as additional colors added to the basic element color are configured in the color field specifying unit.

9. A display method of a field-sequential color liquid crystal display that allocates a basic element color for displaying a display color of each pixel in one frame to a plurality of color fields, and that displays sequentially a color signal allocated to each of the color fields, the method comprising:

generating, based on a video signal received, a synchronization signal that synchronizes with a frame frequency of the video signal, and predetermined video data;
determining, in a changeable manner, number of color fields in one frame, the color signal allocated arbitrarily to each of the color fields, and a transmission order of the color signal thus allocated;

outputting a field specifying signal for specifying each of the color fields corresponding to the transmission order determined at the determining step, at a timing of a field frequency obtained by multiplying the frame frequency by the number of fields; and

outputting the video data generated at the generating step to a display panel, based on the field specifying signal.

# FIG.1

# FIG.2

15 — LCD CONTROL AND DRIVE CIRCUIT

22 — SEQUENCER (LUT)

| 1 | R |
|---|---|
| 2 | W |
| 3 | G |
| 4 | B |
| 5 | K |
| 6 | K |

FIELD SPECIFICATION SIGNAL (360 fields/s) 40

FIELD SPECIFICATION SIGNAL (360 fields/s) 38

24 — BL CONTROL CIRCUIT

LIGHTING TIMING SIGNAL 41

46 — TO BACKLIGHT 12

25 — OUTPUT STAGE SIGNAL PROCESSING AND CONTROL CIRCUIT

44 — TO GATE DRIVER 14

42 — TO SOURCE DRIVER 13

VIDEO DATA SIGNAL 36

23 — FRAME BUFFER

VIDEO DATA SIGNAL 34

SYNCHRONIZATION SIGNAL (60 frames/s) 32

21 — INPUT STAGE SIGNAL PROCESSING AND CONTROL CIRCUIT

VIDEO SIGNAL (60 frames/s) 30

# FIG.3

VIDEO DATA
SIGNAL
36

R
G
B

50
GRADATION
DATA
LINEAR
CONVERTER

R
G
B

52
GRADA-
TION
VALUE
CALCU-
LATION
UNIT

R
G
B
C
M
Y
W

54
FIELD SELECTION UNIT

56
GRADATION
DATA
GAMMA
CONVERTER

25
OUTPUT STAGE SIGNAL PROCESSING
AND CONTROL CIRCUIT

35
TO OUTPUT 42 FOR
DISPLAY PANEL

FIELD
SPECIFICATION

EP 2 410 509 A1

# FIG.4

EP 2 410 509 A1

15 — LCD CONTROL AND DRIVE CIRCUIT

VIDEO DATA MONITORING CIRCUIT (ADAPTIVE COLOR FIELD CONFIGURATION SPECIFICATION) — 60

SEQUENCER (LUT) — 22

| 1 | R |
|---|---|
| 2 | W |
| 3 | G |
| 4 | B |
| 5 | K |
| 6 | K |

FIELD SPECIFICATION SIGNAL (360 fields/s) 40

BL CONTROL CIRCUIT — 24

46 → TO BACKLIGHT 12

FIELD SPECIFICATION SIGNAL (360 fields/s) — 38

LIGHTING TIMING SIGNAL 41

SYNCHRONIZATION SIGNAL (60 frames/s) 32

VIDEO SIGNAL (60 frames/s) 30

INPUT STAGE SIGNAL PROCESSING AND CONTROL CIRCUIT — 21

OUTPUT STAGE SIGNAL PROCESSING AND CONTROL CIRCUIT — 25

44 → TO GATE DRIVER 14

42 → TO SOURCE DRIVER 13

VIDEO DATA SIGNAL 34

VIDEO DATA SIGNAL 36

FRAME BUFFER — 23

# FIG.5

LCD CONTROL AND DRIVE CIRCUIT 15

REPRESENTATIVE COLOR ASSUMPTION CIRCUIT 62

SEQUENCER LUT (EXPANDED TO HALFTONE COLOR REPRESENTATION) 64

VIDEO DATA MONITORING CIRCUIT (ADAPTIVE COLOR FIELD CONFIGURATION SPECIFICATION) 60

1 R(255,0,0)
2 Orange(240,160,10)
3 G(0,255,0)
4 B(0,0,255)
5 K(0,0,0)
6 K(0,0,0)

FIELD SPECIFICATION SIGNAL (360 fields/s) 40

BL CONTROL CIRCUIT 24

46 TO BACKLIGHT 12

VIDEO SIGNAL (60 frames/s) 30

SYNCHRONIZATION SIGNAL (60 frames/s) 32

INPUT STAGE SIGNAL PROCESSING AND CONTROL CIRCUIT 21

FIELD SPECIFICATION SIGNAL (360 fields/s) 38

LIGHTING TIMING SIGNAL 41

OUTPUT STAGE SIGNAL PROCESSING AND CONTROL CIRCUIT 25

44 TO GATE DRIVER 14

42 TO SOURCE DRIVER 13

VIDEO DATA SIGNAL 34

VIDEO DATA SIGNAL 36

FRAME BUFFER 23

EP 2 410 509 A1

| | INTERNATIONAL SEARCH REPORT | International application No. |
|---|---|---|
| | | PCT/JP2010/053296 |

A.  CLASSIFICATION OF SUBJECT MATTER
*G09G3/36*(2006.01)i, *G02F1/133*(2006.01)i, *G09G3/20*(2006.01)i, *G09G3/34*
(2006.01)i

According to International Patent Classification (IPC) or to both national classification and IPC

B.  FIELDS SEARCHED

Minimum documentation searched (classification system followed by classification symbols)
G09G3/36, G02F1/133, G09G3/20, G09G3/34

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2008-165048 A  (Toshiba Corp.),<br>17 July 2008 (17.07.2008),<br>paragraphs [0025] to [0071]; fig. 1 to 11<br>(Family: none) | 1,4,9<br>2-3,5,6-8 |
| Y | JP 2006-293095 A  (Toshiba Matsushita Display<br>Technology Co., Ltd.),<br>26 October 2006 (26.10.2006),<br>paragraphs [0046] to [0050], [0074]; fig. 3<br>(Family: none) | 2-3,6-8 |
| Y | JP 2002-191055 A  (Toshiba Corp.),<br>05 July 2002 (05.07.2002),<br>paragraphs [0066] to [0077]; fig. 11<br>& US 2002-0122019 A1 | 5 |

☐  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 March, 2010 (31.03.10) | 13 April, 2010 (13.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007264211 A